# EUROPEAN PATENT APPLICATION

(11) **EP 2 234 021 A1**
(43) Date of publication of application: **29.09.2010**
(21) Application number: 10153902.1
(22) Date of filing: 17.02.2010
(51) Int. Cl.: G06F 13/16

(54) **Memory node for use within a data storage system having a plurality of interconnected memory nodes**

(30) Priority: 23.03.2009 US 409278
(71) Applicant: Honeywell International Inc., Morristown, NJ 07962 (US)
(72) Inventor: Garcia, Fernando, Morristown, NJ 07962-2245 (US); Hearn, David Christopher, Morristown, NJ 07962-2245 (US)
(74) Representative: Buckley, Guy Julian

(57) **Abstract**

A memory node (10) for use within a data storage system (400) having a plurality of interconnected memory nodes (120-127) is provided. The memory node (10) comprises three data input interfaces (20, 22, 24), three data output interfaces (30, 32, 34), a memory module (14) for storing data, and a controller (12) coupled to the three data output interfaces (30, 32, 34), the three data input interfaces (20, 22, 24), and the memory module (14). The controller (12) is configured to receive data via one of the three input interfaces (20, 22, 24), the data having a predetermined destination, read a first portion of the data to determine if the memory node (10) is the predetermined destination, store a second portion of the data on the memory module (14), if the memory node (10) is the predetermined destination, and transmit the received data via at least one of the three data output interfaces (30, 32, 34), if the memory node (10) is not the predetermined destination.

## Description

### TECHNICAL FIELD

The present invention generally relates to data storage systems, and more particularly relates to a memory node for use within a data storage system having a plurality of interconnected memory nodes.

### BACKGROUND

Data recorders provide a high-bandwidth and large capacity storage medium for storing data generated during the operation of electronic and mechanical devices that have limited availability for maintenance or timely maintenance when they are operationally deployed. For example, a satellite, or other spacecraft system, may be placed in orbit around the Earth where it cannot be accessed without great cost. In this case, a data recorder may be configured to collect and store operational and diagnostic data generated by the satellite, or other spacecraft system. This stored data may then be periodically retrieved, or accessed when an operational issue is detected, in order to assess the operational status of the satellite. In addition, many commercial aircraft operators strive to minimize the amount of time that an aircraft is out of service for maintenance or other reasons. In this case, a flight data recorder may be coupled to the aircraft and configured to collect data generated during its operation. This data may then be used by maintenance personnel to efficiently identify and diagnose operational issues within the aircraft, reducing the total maintenance time. Thus, data recorders provide an effective mechanism for storing operational and diagnostic data that can significantly decrease the cost and difficulty associated with operating and maintaining a remote electronic or mechanical device.

In some instances, the data that is stored on a data recorder may be the only information available for detecting and/or diagnosing an operational issue on an electronic or mechanical device (e.g., such as the spacecraft system or the aircraft described above). Given the value of this data, fault tolerance is a significant issue in the field of data recorder design. For example, many data recorders include various component devices (e.g., processing units and memory devices) that are configured to receive and/or store data. These component devices can be expected to periodically experience operational faults or failures that could adversely affect on the operation of the data recorder or prevent the data recorder from receiving and/or storing data. Thus, data recorder designers strive to create data recorders that can continue to store data even after the failure of one or more of their component devices.

Accordingly, it is desirable to provide an apparatus for constructing fault tolerant data recorders that can withstand the failure of one or more of their component devices. Furthermore, other desirable features and characteristics of the present invention will become apparent from the subsequent detailed description of the invention and the appended claims, taken in conjunction with the accompanying drawings and this background of the invention.

### BRIEF SUMMARY

In one embodiment, a memory node for use within a data storage system having a plurality of interconnected memory nodes is provided. The memory node comprises three data input interfaces, three data output interfaces, a memory module for storing data, and a controller coupled to the three data output interfaces, the three data input interfaces, and the memory module. The controller is configured to receive data via one of the three input interfaces, the data having a predetermined destination, read a first portion of the data to determine if the memory node is the predetermined destination, store a second portion of the data on the memory module, if the memory node is the predetermined destination, and transmit the received data via at least one of the three data output interfaces, if the memory node is not the predetermined destination and is configured in the system to do so.

### BRIEF DESCRIPTION OF THE DRAWINGS

The present invention will hereinafter be described in conjunction with the following drawing figures, wherein like numerals denote like elements, and

FIG. 1 is a block diagram of an exemplary memory node;

FIG.2 is a block diagram of a three-dimensional array of interconnected memory nodes according to a first embodiment;

FIG. 3 is a block diagram of a three-dimensional array of interconnected memory nodes according to a second embodiment; and

FIG. 4 is a block diagram of an exemplary data storage system configured to use the memory node of FIG. 1.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Embodiments provide a memory node for use within a data storage system having a plurality of interconnected memory nodes. As further described below, embodiments of the memory node provide increased data connectivity within the data storage system, enabling data storage system designers to provide significantly increased system reliability and fault tolerance without a significant increase in cost. The data storage system may comprise a data recorder for storing diagnostic and operational data generated during the operation of an electronic or mechanical device (hereinafter, the "target device"). As described above, such data recorders are often used on target devices (e.g., aircraft and spacecraft systems) that have limited availability for maintenance when they are operationally deployed. In such cases, the data stored on the data recorder may be the only information available for assessing the operational status of, or identifying an operational issue with, a target device. Therefore, it is important for the data recorder to have a high level of fault tolerance, enabling it to store data even after a significant number of its component memory nodes have failed.

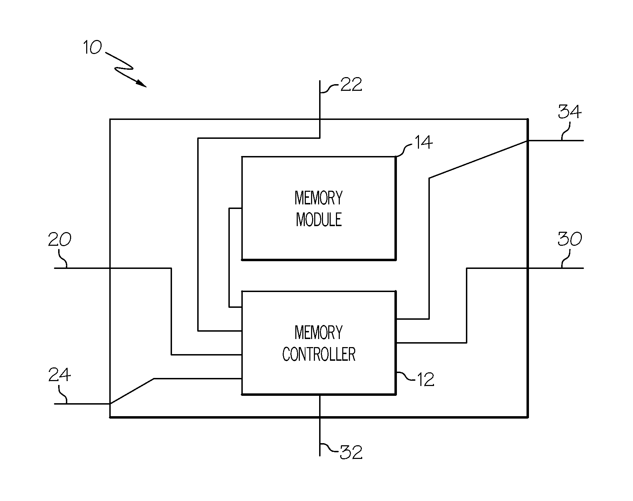

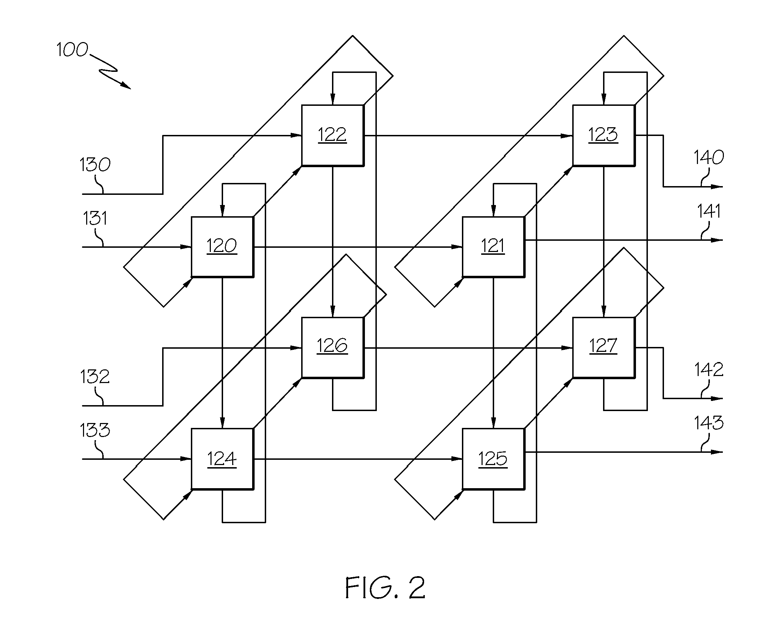

FIG. 1 is a block diagram of an exemplary memory node 10 according to one embodiment. As depicted, memory node 10 includes a memory controller 12 that is coupled to a memory module 14, three data input interfaces 20, 22, 24, and three data output interfaces 30, 32, 34. Memory node 10 receives data via data input interfaces 20, 22, 24 and may transmit data via data output interfaces 30, 32, 34. As further described below, memory node 10 may be deployed as one of a plurality of interconnected memory nodes 10 within a data storage system. In one embodiment, the plurality of interconnected memory nodes 10 comprises a three-dimensional array of interconnected memory nodes 10 as described below with reference to FIGS. 2-4. However, it should be noted that memory node 10 may also be utilized within one and two-dimensional arrays of interconnected memory nodes 10.

Memory module 14 stores data received from memory controller 12 and may include dynamic random access memory (DRAM), static random access memory (SRAM), synchronous dynamic random access memory (SDRAM), double-data-rate synchronous dynamic access memory (DDR SDRAM), or any other form of electronic or non-electronic memory. In one embodiment, the memory within memory module 14 may be arranged within a plurality of memory arrays or banks.

Memory controller 12 may comprise a programmable logic control system (PLC), an application specific integrated circuit (ASIC), a microprocessor, or any other type of electronic controller known by those skilled in the art. It may be comprised of one or more components of a digital and/or analog type and may be programmable by software and/or firmware, a hardwired state-machine, a combination of these, or any other method known to those skilled in the art.

Memory controller 12 is configured to receive data (hereinafter, the "received data") transmitted to memory node 10 via data input interfaces 20, 22, 24. Based on the contents of the received data, memory controller 12 may store at least a portion of the received data in memory module 14, retrieve stored data from memory module 14, or perform another operation as described below. In addition, memory controller 12 may also be configured to transmit data via data output interfaces 30, 32, 34. Memory controller 12 may transmit data via all three data output interfaces 30, 32, 34 (hereinafter, the "broadcast approach") or via one or more selected data output interfaces 30, 32, 34 (hereinafter, the "selected paths approach"). Under the selected paths approach, memory controller 12 selects the data output interface(s) 30, 32, 34 based on data path information within the received data or based on logic or control settings within memory controller 12. For example, memory controller 12 may include one or more control registers for storing values that identify a current data output configuration. In this case, memory controller 12 selects the data output interface(s) 30, 32, 34 based on the data output configuration.

In one embodiment, memory controller 12 is configured to perform one of a plurality of operations based on the content of the received data, including a WRITE operation, a READ operation, a TEST operation, and one or more control operations. Memory controller 12 performs a WRITE operation if the received data comprises a data packet. During the WRITE operation, memory controller 12 stores at least a portion of the data packet in memory or, in some embodiments, transmits the data packet via data output interfaces 30, 32, 34. In one embodiment, memory node 10 is associated with a unique address range and the data packet includes a destination address and payload data. Upon receiving the data packet via data input interface 20, 22, or 24, memory controller 12 determines if the destination address corresponds to the unique address range for memory node 10. If the destination address does correspond to the unique address range for memory node 10, memory controller 12 extracts the payload data from the data packet and stores the payload data in memory module 14.

Alternatively, if the destination address of the data packet does not correspond to the unique address range for memory node 10, memory controller 12 may be configured to transmit the received data packet via at least one of the data output interfaces 30, 32, 34. Memory controller 12 may utilize the broadcast approach or the selected paths approach to transmit the data packet. In the case of the selected paths approach, memory controller 12 may select the data output interface(s) 30, 32, or 34 based on routing information within the data packet or based on the current data output configuration of memory controller 12 as described above. It should also be noted that memory controller 12 may be also configured not to transmit the data packet via data output interfaces 30, 32, 34 when the destination address for the data packet does not correspond to the unique address range for memory node 10.

Memory controller 12 performs a READ operation if the retrieved data comprises a data request. During a READ operation, memory controller 12 determines if requested data is stored in memory module 14. If the requested data is stored in memory module 14, memory controller 12 transmits the data request via one or more of the data output interfaces 30, 32, and/or 34. Alternatively, if the data request does correspond to data stored in memory module 14, memory controller 12 retrieves the data from memory module 14 and transmits the data via one or more of the data output interfaces 30, 32, and 34.

For example, in one embodiment memory node 10 is associated with a unique address range and the data request may include a requested address range. During the READ operation, memory controller 12 determines if the requested address range is within the unique address range for memory node 10. If the requested address range is within the unique address range for memory node 10, memory controller 12 generates a data response that includes data stored on memory module 14 that corresponds to the requested address range. Memory controller 12 transmits the data response via at least on data output interface 30, 32, 34. Memory controller 12 may transmit the data response using the broadcast approach or the selected paths approach.

Alternatively, if the requested address range is not within the unique address range for memory node 10, memory controller 12 may be configured to transmit the received data request via at least one of the data output interfaces 30, 32, 34. Memory controller 12 may utilize the broadcast approach or the selected paths approach to transmit the data request. In the case of the selected paths approach, memory controller 12 may select the data output interface(s) 30, 32, or 34 based on routing information within the data request or based on its current data output configuration. In addition, memory controller 12 may be configured not to transmit the data packet when the requested address range is not within the unique address range for memory node 10.

Memory controller 12 performs a TEST operation if the received data comprises a status request. During a TEST operation, memory controller generates and transmits a status response that describes the operational status of memory node 10 (e.g., the status of memory controller 12, memory module 14, data input interfaces 20, 22, 24, and/or data output interfaces 30, 32, 34) via at least one data output interface 30, 32, 34. In one embodiment, the status request includes a status destination address and memory controller 12 is configured to generate a status response of the status destination address corresponds to the unique address range for memory node 10. Alternatively, if the status destination address does not correspond to the unique address range, memory controller 12 may transmit the received status request via at least one data output interface 30, 32, 34 (e.g., via the broadcast method or the selected data paths method). It should be noted that memory controller 12 may also be configured not to transmit the status request when the status destination address does not correspond to the unique address range for memory node 10.

Finally, the received data may comprise a command signal that causes memory controller 12 to perform a command operation. For example, command signal may comprise a reset request that causes memory controller 12 and, in some instances, memory module 14 to be reset. Further, the command signal may comprise a data output configuration signal that causes memory controller 12 to change its current data output configuration. In one embodiment, the command signals include a command destination address and are processed by memory controller 12 in a manner that is substantially similar to the process described above for processing a data packet. Accordingly, if the command destination address corresponds to a unique address range for memory node 10, memory controller 12 performs the appropriate command operation. Alternatively, memory controller 12 transmits the command signal via at least one data output interface 30, 32, 34 (e.g., via the broadcast method or the selected data paths method). It should be noted that memory controller 12 may also be configured not to transmit the command signal if the command destination address does not correspond to the unique address range for memory node 10.

FIG. 2 is a block diagram of a three-dimensional array 100 of interconnected memory nodes of according to a first embodiment. As depicted, array 100 is a 2x2x2 array having an upper level of memory nodes 120, 121, 122, 123, and a lower level of memory nodes 124, 125, 126, 127. Each memory node 120-127 is substantially similar to memory node 10 (FIG. 1). Memory nodes 120-127 are each associated with a unique address range and configured to receive data and command signals via three data input interfaces and to transmit data and command signals via three data output interfaces.

As shown, each data input interface is coupled to an array input 130, 131, 132, 133 or to another memory node 120-127. Further, each data output interface is coupled to an array output 140, 141, 142, 143 or to another memory node 120-127. This three-dimensional structure provides connectivity via a plurality of data paths between each array input 130-133 and each array output 140-143. This plurality of data paths enables array 100 to continue storing data, even if one or more of the individual memory nodes 120-127 experience an operational fault or failure.

Data is stored within a target memory node 120-127 by transmitting a data packet comprising a destination address and the payload data into array 100 via array inputs 130-133. For example, a data packet having a destination address that corresponds to memory node 127 may be transmitted into the three-dimensional array 100 via array input 131. The data packet is first received at memory node 120 and, as described above, the memory controller (e.g., memory controller 12 of FIG. 1) for memory node 120 performs a WRITE operation. In this case, the destination address for the data packet does not correspond to the unique address range for memory node 120 and the memory controller transmits the data packet via at least one of the data output interfaces for memory node 120. The memory controller for memory node 120 may utilize the broadcast approach or the selected data paths approach to transmit the data packet. While a description of the broadcast approach and selected data paths approach are provided below with regard to the routing of a data packet within array 100, it will be understood by one skilled in the art that the broadcast approach and the selected paths approached may be similarly utilized to route the requests, responses, command signals, or other data within array 100.

Under the broadcast approach, the data packet is transmitted via all three data input interfaces for memory node 120. Thus, memory nodes 121, 122, and 124 each receive the data packet and their memory controllers also perform WRITE operations, causing the data packet to be transmitted via the data output interfaces for memory nodes 121, 122, and 124. This process continues and the data packet proliferates throughout array 100 until it reaches memory node 127. As shown, there are a plurality of possible data paths between array input 131 and memory node 127. The broadcast approach enables a data packet to be transmitted between array input 131 and memory node 127 as long as there is at least one data path comprising memory nodes that are still operational. Further, if memory node 120, or array input 131, experiences a fault, another array input 130, 132, 133 may be utilized to transmit data to memory node 127. Thus, data may be routed to memory node 127 even if one or more of memory nodes 120-126 are no longer functioning. This flexibility provides array 100 with a high level of fault tolerance with respect to the component memory node 120-127.

It should be noted that under the broadcast approach it is possible for a data packet to be transmitted in an infinite loop within array 100. For example, a data packet could be infinitely looped between memory nodes 120 and 122. Further, it is possible for memory node 127 to receive multiple copies of the data packet (e.g., because the data packet multiplies as it spreads throughout three-dimensional array 100) and, consequently, to store multiple copies of the payload data. These occurrences may be prevented by configuring the memory controllers for memory nodes 120-127 to recognize data packets that they have received previously and to process each data packet only one time. For example, each data packet may include a unique packet identifier. Further, the memory controllers for memory nodes 120-127 may be configured to maintain a record that includes the unique packet identifiers for a predetermined number of the most recently received data packets. In this case, each memory controller compares the packet identifier for each received data packet with the stored packet identifiers within this record. If the received packet identifier corresponds to a stored packet identifier, the memory controllers determine that they have already processed the data packet and the data packet is discarded.

Under the selected data paths approach, the data packet is transmitted via one or more data output interfaces that are selected by the memory controller for memory node 120. As described above, the memory controller for memory node 120 may select the appropriate data output interface(s) based on data path information stored within the data packet. For example, each distinct data path between array inputs 130-133 and array outputs 140-143 may be associated with a unique data path identifier. Further, a first data path identifier corresponding to the data path that traverses memory nodes 120, 121, 125, and 127 between array input 131 and array output 142 may be included within the data packet. In this case, the memory controller for memory node 120 could be configured to select the data output interface that is coupled to memory node 121 based on the first data path identifier. The memory controllers for memory nodes 121 and 125 would also perform WRITE operations and select the data interfaces that correspond to the first path identifier, enabling the data packet to reach the memory node 127. Alternatively, if memory nodes 121 and/or 125 experience a fault and are no longer functioning properly, the data packet may include a second data path identifier corresponding to a data path that traverses memory nodes 120, 122, 123, and 127. In this case, the memory controllers for memory nodes 120, 122, and 123 would select the data output interfaces that correspond to the second data path identifier, until the data packet reached the memory node 127.

In addition, under the selected paths approach the memory controller for memory node 120 may select the appropriate data output interface(s) based on logic or control settings within the memory controller. As noted above, each memory controller may include a plurality of data output configurations that each corresponds to a different output interface or a different combination of data output interfaces. In this case, the memory controllers are configured to select the appropriate data output interface based on their current data output configuration. For example, the data output configurations of the memory controllers for memory nodes 120, 121, and 125 may be set to allow the data packet to traverse each of those memory nodes before reaching memory node 127. Alternatively, if memory nodes 121 and/or 125 experience a fault and are no longer functioning properly, the current data output configurations of the memory controller for memory nodes 120, 122, and 123 may be set (e.g., via the data output configuration signal described above with regard to FIG. 1) to allow the data packet to traverse those memory nodes until it reaches memory node 127. Thus, the selected data path approach also enables data to be transmitted to memory node 127 as long as there is at least one data path of functioning memory nodes 120-126 between an array input 130 and memory node 127, providing flexibility for routing data between array inputs 130-133, array outputs 140-143, and memory nodes 120-126. This flexibility enables array 100 to have a high level of fault tolerance with respect to the component memory nodes 120-127.

Data may be retrieved from a memory node 120-127 by transmitting a data request comprising a requested address range into array 100 via array inputs 130-133. For example, a data request having a requested address range that corresponds to memory node 127 may be transmitted into array 100 via array input 131. The data request is first received by memory node 120 and, as described above, the memory controller for memory node 120 performs a READ operation. In this case, the requested address range is not within the unique address range for memory node 120 and the memory controller transmits the data request via at least one of the data output interfaces for memory node 120. The memory controller for memory node 120 may transmit the data response utilizing the broadcast method or the selected data paths method described above. In the case of the selected data paths approach, the data request may also include data path information identifying a desired data path between array input 131 and memory node 127.

The data request then traverses array 100, or a selected path within array 100, and is received by memory node 127. The memory controller for memory node 127 performs a READ operation and determines that the requested address range is within the unique address range for memory node 127. The memory controller then generates a data response that includes data stored within the memory module (e.g., memory module 14 of FIG. 1) of memory node 127 that corresponds to the requested address range. Finally, the memory controller transmits the generated data response via at least one of the data output interfaces of memory node 127 to at least one of the array outputs 140-143. The data response may be transmitted via the broadcast approach or via the selected paths approach. Under the selected paths approach, the data response may include data path information. In one embodiment, the memory controller for memory node 127 determines the data path information for data response based on data path information included in the corresponding data request.

The operational status of each memory node 120-127 within array 100 may be determined by transmitting a status request via one of the array inputs 130-133. The status request may include a status destination address that corresponds to the unique address range for a target memory node 120-127 and may be routed within array 100 using the broadcast approach or the selected paths approach in a manner that is substantially similar to the routing of a data packet. If the memory controller for the target memory node 120-127 is still operational, it performs a TEST operation and transmits a status response upon receiving the status request. The status response is then transmitted via at least one of the data output interfaces for the target memory to at least one of the array outputs 140-143 using the broadcast approach of the selected paths approach. Under the selected paths approach, the status response may include data path information that is based on the data path information included in the corresponding status request.

Finally, command signals (e.g., a reset signal and/or a data output configuration signal) may be routed to each memory node 120-127 within array 100 using the broadcast approach or a selected paths approach in a manner that is substantially similar to the methods described above for routing a data packet.

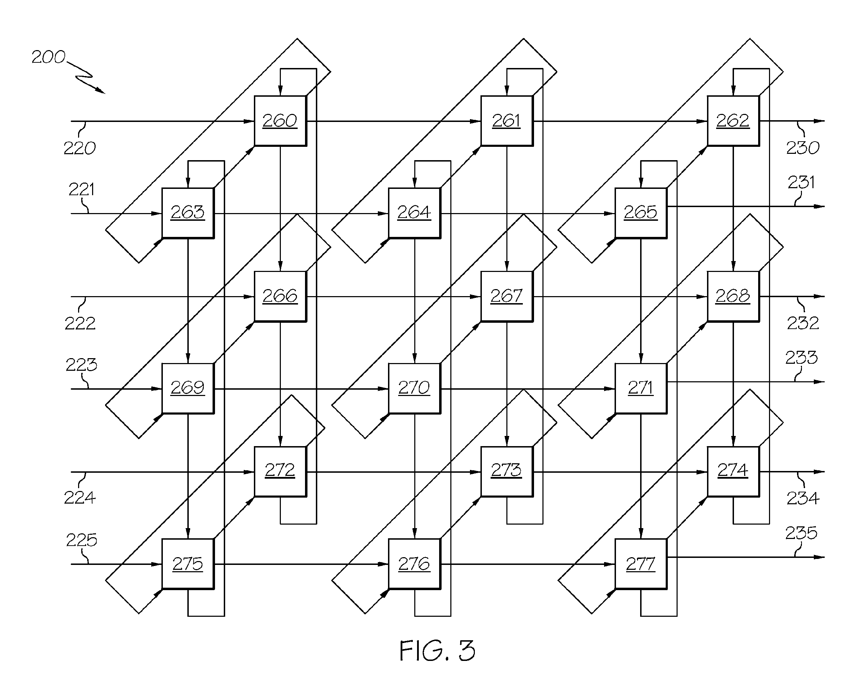

FIG. 3 is a block diagram of a three-dimensional array 200 of interconnected memory nodes according to a second embodiment. Three-dimensional array 200 is a 3x3x2 array having six array inputs 220, 221, 222, 223, 224, 225, six array outputs 230, 231, 232, 233, 234, 235, and eighteen memory nodes 260, 261, 262, 263, 264, 265, 266, 267, 268, 269, 270, 271, 272, 273, 274, 275, 276, 277. Each memory node 260-277 is configured to receive data via three data input interfaces and to transmit data via three data output interfaces. As depicted, each data input interface is coupled to an array input 220-225 or to another memory node 260-277. Further, each data output interface is coupled to an array output 230-235 or to another memory node. As described above with respect to array 100 (FIG. 2), this configuration provides a plurality of data paths between the array inputs 220-225, the array outputs 230-235, and the memory nodes 277. This plurality of data paths enables array 200 to have a high level of fault tolerance with respect to the component memory nodes 260-277. Array 200 provides an example of the scalability in data storage system design that can be achieved utilizing memory node 10 of FIG. 1.

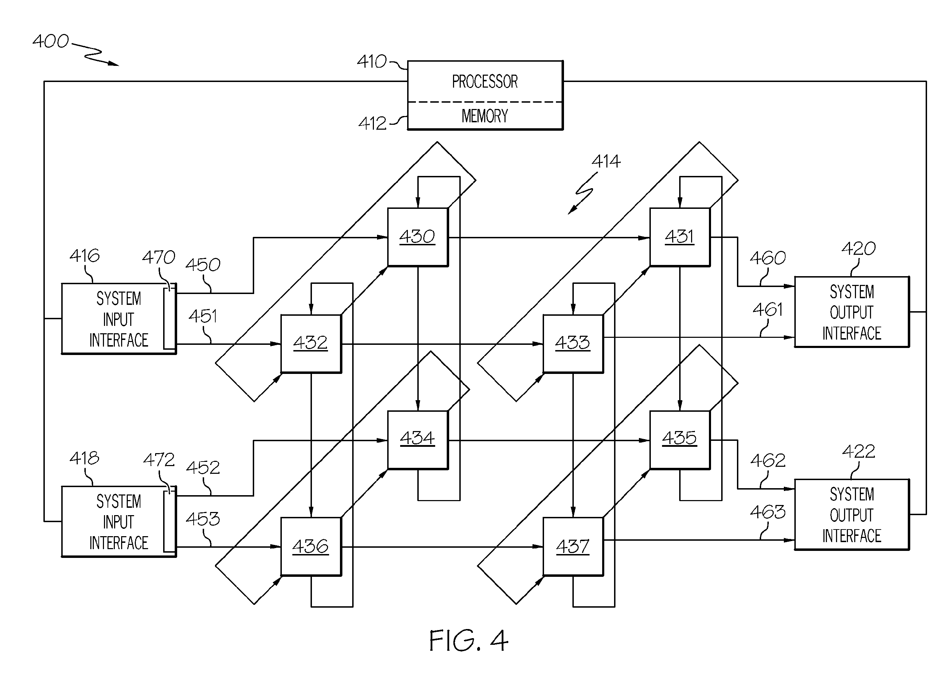

FIG. 4 is a block diagram of an exemplary data storage system 400 configured to use memory node 10 of FIG. 1. Data storage system 400 includes a processor 410, memory 412, a memory node array 414, two system input interfaces 416, 418, and two system output interfaces 420, 422. Array 414 comprises memory nodes 430, 431, 432, 433, 434, 435, 436, and 437 that are each associated with a unique address range. Array 414 also includes four array inputs 450, 451, 452, 453 and four array outputs 460, 461, 462, 463. As depicted, array inputs 450 and 451 are redundant inputs that are both coupled to system input interface 416 and array inputs 452 and 453 are redundant inputs that are both coupled to system input interface 418. Further, array outputs 460 and 462 are redundant outputs that are both coupled to system output interface 420 and array outputs 462 and 463 are redundant outputs that are both coupled to system output interface 422.

System input interfaces 416 and 418 are coupled to processor 410 and to the array inputs 450-453 as described above. System input interfaces 416 and 418 receive data generated during operation of the target device. In one embodiment, system input interfaces 416 and 418 may comprise ports that are coupled (wired or wirelessly) to one or more control units, sensors, or other systems of the target device. Each system input interface 416, 418 comprises a controller 470, 472. Controllers 470, 472 may comprise PLCs, ASICs, microprocessors, or any other type of electronic controllers known by those skilled in the art. They may be comprised of one or more components of digital and/or analog type and may be programmable by software and/or firmware, a hardwired state-machine, a combination of these, or any other method known to those skilled in the art. As further described below, controllers 470, 472 are configured to transmit data packets to a target memory node 430-437 in cooperation with processor 410. Further controllers 470, 472 may also be configured to transmit data requests, status requests, and command signals to a target memory node 430-437 in cooperation with processor 410.

System output interfaces 420 and 422 are coupled to processor 410 and to array outputs 460-463 as described above. System output interfaces 420 and 422 are configured to receive data that is transmitted by a memory node 430-437 in response to a data request. In one embodiment, system output interfaces 420 comprise ports that may be coupled (wired or wirelessly) to a non-illustrated electronic device for the purpose of retrieving data from data storage system 400. The retrieved data may be analyzed by processor 410 and/or transferred to the electronic device.

Processor 410 determines where data that is received at system input interfaces 416 and 418 will be stored within memory node array 414, maintains a record of the data that is stored within each memory node 430-437, and may also maintain a record of memory nodes 430-437 that have experienced faults and are not functioning properly or that are not enabled. Processor 410 may include one or more microprocessors, each of which may be any one of numerous known general-purpose microprocessors or application specific processors that operate in response to program instructions. Memory 412 is configured to store instructions, in any format including source or object code, and/or data.

As described above, during operation of the target device data is received at system input interfaces 416 and 418. Processor 410 identifies a destination address for a target memory node 430-437 and communicates the destination address to the appropriate system input interface 416, 418. In addition, if the selected data paths approach is being utilized, processor 410 may also provide data path information to the appropriate system input interface 416, 418. Controllers 470 or 472 generate one or more data packets comprising the destination address, payload data, and any additional information (e.g., a unique identifier if the broadcast approach is being used or data path information is the selected data paths approach is being used) for routing the data packet within array 414. The data packet(s) are transmitted into the memory node array 414 via array inputs 450-453.

To retrieve data from data storage system 400, processor 410 identifies a requested address range for the requested data and generates one of more data requests in cooperation with system input interface(s) 416, 418. For example, in one embodiment an electronic device is coupled (wired or wirelessly) to system output interface 420 or 422. The electronic device communicates with processor 410 to request data stored within array 414. In this case, processor 410 generates the appropriate data request(s) in cooperation with system input interfaces 416 and 418. The data request(s) may include the requested address range and any additional information (e.g., a unique identifier or data path information) that is necessary to route the data request. The data request(s) are then transmitted into the memory node array 414 via array inputs 450-453. The target memory node(s) 430-437 transmit the requested data to the appropriate system output interface 420, 422 via array outputs 460-463.

In addition, processor 410 may periodically generate and transmit status requests to memory nodes 430-437 in cooperation with system input interfaces 416 and/or 418. Each status request may include a status destination address that corresponds to the address range for a target memory node 430-437 and any additional information (e.g., a unique identifier or data path information) that is required to route the status request. Each status request is transmitted into the memory node array 414 via array inputs 450-452 and routed to the target memory node 430-437. As described above, if the memory controller for the target memory node 430-437 is operational, it generates a status response that is routed to one of the system output interfaces 420, 422 via array outputs 460-463. Processor 410 utilizes these status responses, or the lack of a status response, to maintain a record of memory nodes that are not functioning properly. This record may be used to determine where to store new data that is received via system input interfaces 416 and 418 or to route data within memory node array 414.

Finally, processor 410 may transmit command signals (e.g., a reset signal or a data output configuration signal) to one or more memory nodes 430-437. Processor 410 generates and transmits the command signal to the target memory node 430-437 in cooperation with system input interfaces 416 and/or 418. Each command signal may include the command destination address that corresponds to the address range for a target memory node 430-437 and any additional information (e.g., a unique identifier or data path information) that is necessary to route the command signal within memory node array 414. Command signals are transmitted into memory node array 414 via array inputs 450-453.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A memory node (10) for use within a data storage system (400) having a plurality of interconnected memory nodes (120-127), the memory node (10) comprising:
three data input interfaces (20, 22, 24);
three data output interfaces (30, 32, 34);
a memory module (14) for storing data;
a controller (12) coupled to the three data input interfaces (20, 22, 24), the three data output interfaces (30, 32, 34), and the memory module (14), the controller (12) configured to:
receive data via one of the three data input interfaces (20, 22, 24), the data having a predetermined destination;
read a first portion of the data to determine if the memory node (10) is the predetermined destination;
store a second portion of the data on the memory module (14), if the memory node (10) is the predetermined destination; and
transmit the received data via at least one of the three data output interfaces (30, 32, 34), if the memory node (10) is not the predetermined destination.

2. The memory node (10) of Claim 1, wherein the controller (12) is further configured to:
receive a data request via one of the three data input interfaces (20, 22, 24), the data request having a predetermined destination;
read a first portion of the data request to determine if the memory node (10) is the predetermined destination;
retrieve the data from the memory module (14) based on a second portion of the data request, if the memory node (10) is the predetermined destination;
transmit the retrieved data via at least one of the three data output interfaces (30, 32, 34), if the memory node (10) is not the predetermined destination; and
transmit the data request via at least one of the three data output interfaces (30, 32, 34), if the memory node (10) is not the predetermined destination.

3. The memory node (10) of Claim 2, wherein the controller (12) is further configured to:
receive a status request via one of the three data input interfaces (20, 22, 24);
generate a status response describing the operational status of the memory node (10); and
transmit the status response via at least one of the three data output interfaces (30, 32,34).

4. The memory node (10) of Claim 2, wherein:
the plurality of interconnected memory nodes (120-127) comprises a three-dimensional array (100) having one or more array inputs (130-133) and one or more array outputs (140-143);
each of the three data input interfaces (20, 22, 24) is coupled to an array input or to a different memory node (10) within the three-dimensional array (100); and
each of the three data output interfaces (30, 32, 34) is coupled to an array output or to a different memory node (10) within the three-dimensional array (100).

5. The memory node (10) of Claim 4, wherein:
at least one data path exists between each array input (130-133) and each memory node (10) within the three-dimensional array (100); and
at least one data path exists between each memory node (10) within the three-dimensional array (100) and each array output (140-143).

6. The memory node (10) of Claim 5, wherein each memory node (10) within the three-dimensional array (100) is associated with a unique address range, the received data comprises a destination address and payload data, and the controller (12) is further configured to:
store the payload data on the memory module (14), if the unique address range of the memory node (10) corresponds to the destination address; and
transmit the received data via at least one of the three data output interfaces (30, 32, 34), if the unique address range of the memory node (10) does not correspond to the destination address.

7. The memory node (10) of Claim 6, wherein the received data further comprises data path information and the controller (12) is further configured to:
select one of the three data output interfaces (30, 32, 34) based on the data path information, if the unique address range of the memory node (10) does not correspond to the destination address; and
transmit the received data via the selected one of the three data output interfaces (30, 32, 34), if the unique address range of the memory node (10) does not correspond to the destination address.

8. The memory node (10) of Claim 6, wherein the controller (12) includes a current data output configuration and is further configured to:
select one of the three data output interfaces (30, 32, 34) based on the current data output configuration, if the unique address range of the memory node (10) does not correspond to the destination address; and
transmit the received data via the selected one of the three data output interfaces (30, 32, 34), if the unique address range of the memory node (10) does not correspond to the destination address.

9. The memory node (10) of Claim 5, wherein each memory node (10) within the three-dimensional array (100) is associated with a unique address range, the data request comprises a requested address range, and the controller (12) is further configured to:
retrieve the data from the memory module (14) based on the requested address range, if the requested address range is within the unique address range of the memory node (10);
transmit the retrieved data via at least one of the three data output interfaces (30, 32, 34), if the requested address range is within the unique address range of the memory node (10); and
transmit the data request via at least one of the three data output interfaces (30, 32, 34), if the requested address range is not within the unique address range of the memory node (10).

10. The memory node (10) of Claim 9, wherein the data request further comprises data path information and the controller (12) is further configured to:
select one of the three data output interfaces (30, 32, 34) based on the data path information;
transmit the retrieved data via the selected one of the three data output interfaces (30, 32, 34), if the requested address range is within the unique address range of the memory node (10); and
transmit the data request via the selected one of the three data output interfaces (30, 32, 34), if the requested address range is not within the unique address range of the memory node (10).
